(19) **Europäisches Patentamt**

**European Patent Office**

**Office européen des brevets**

(11) **EP 1 344 857 A1**

(12) **EUROPEAN PATENT APPLICATION**

(43) Date of publication:
**17.09.2003 Bulletin 2003/38**

(51) Int Cl.[7]: **D04H 3/00**, D04H 13/00,
C08L 23/04, B32B 27/14

(21) Application number: **03251344.2**

(22) Date of filing: **06.03.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **07.03.2002 US 93649**

(71) Applicant: **E.I. du Pont de Nemours and Company
Wilmington, Delaware 19880-0024 (US)**

(72) Inventor: **Bansal, Vishal
Richmond, Virginia 23233 (US)**

(74) Representative: **Thomson, James B.
Frank B. Dehn & Co.
179 Queen Victoria Street
London EC4V 4EL (GB)**

(54) **Multiple component spunbound web and laminates thereof**

(57)  A multiple component spunbond nonwoven web is provided which is formed from continuous multiple component fibers which include a polyester component and a polyethylene component. The polyethylene component is a linear low density polyethylene composition which has a density, melt index, and polydispersity falling within specified ranges to provide an improved balance of spinning and spunbond fabric properties compared to similar spunbond fabrics which are formed from a linear low density polyethylene having a density and/or melt index and/or polydispersity falling outside the specified ranges. The spunbond fibers are preferably formed in a sheath-core configuration with the polyester component in the core and the linear low density polyethylene component in the sheath.

EP 1 344 857 A1

**Description**

**<u>BACKGROUND OF THE INVENTION</u>**

<u>Field of the Invention</u>

This invention relates to multiple component spunbond nonwoven fabrics and composite sheets thereof, which are soft, drapeable, and strong and which can be used in medical applications which require sterilization with gamma-radiation. More specifically, the invention relates to multiple component spunbond nonwoven fabrics in which at least one of the components is a linear low density polyethylene (LLDPE) composition having a density between about 0.93 $g/cm^3$ to about 0.95 $g/cm^3$, a melt index between about 18 g/10 min to about 22 g/10 min, and a polydispersity ($P_d$) between about 3.6 to about 6.

<u>Description of Related Art</u>

Spunbond nonwoven webs of linear low density polyethylene are known in the art. Fowells U.S. Patent 4,644,045 describes spunbond webs prepared by extruding linear low density polyethylene at temperatures between about 185°C and 215°C wherein the linear low density polyethylene has a percent crystallinity, a cone die melt flow, and a ratio of the natural logarithm of die swell to melt index falling within specified limits. Krup et al. U.S. Patent 4,842,922 discloses blends of high molecular weight linear polyethylene and low molecular weight linear polyethylene which have improved fiber-forming capabilities. Suitable high molecular weight linear polyethylenes are described as including linear low density polyethylenes having a density between about 0.91 $g/cm^3$ to about 0.96 $g/cm^3$ and a melt flow rate less than 25g/10 min, preferably less than about 20 g/10 min, and especially less than about 5 g/10 min. Suitable low molecular weight polyethylenes are described as including linear low density polyethylenes having a density between about 0.91 $g/cm^3$ to about 0.96 $g/cm^3$ and a melt flow rate greater than 25 g/10 min, preferably greater than about 40 g/10 min. Davey et al. U.S. Patent 5,322,728 (Davey) discloses fibers comprising an ethylene copolymer having a density in the range of about 0.86 to about 0.93 $g/cm^3$, molecular weight distribution in the range of about 2 to about 3.5, and a melt index in the range of about 4 to about 1000, and a solubility distribution breadth index of less than about 25°C. The ethylene copolymer is a linear low density polyethylene which has a narrow molecular weight distribution and is produced by single-site catalysis. Single site catalysts are also referred to in the art as metallocene or constrained geometry catalysts. It is proposed that the lack of low molecular weight species in LLDPE prepared by single site catalysis eliminates spinning problems caused by deposits on the spinneret which can occur during spinning of linear low density polyethylenes containing low molecular weight species.

Nonwoven fabrics comprising multiple component fibers are known in the art. For example, Sugihara et al. U.S. Patent No. 4,477,516 describes nonwoven fabrics obtained by forming a fiber aggregate of hot-melt-adhesive composite fibers composed of a first component of a polyethylene resin composition consisting of 50 to 100 weight percent of a straight chain low density polyethylene and 50 to 0 weight percent of another kind of polyethylene and a second component of a fiber-formable polymer having a melting point higher than either polyethylene in the first component by 30°C or more. The nonwoven fabrics are described as being prepared by processes such as carding, air-laying, dry pulping, and wet paper-making processes. Lickfield et al. U.S. Patent 5,484,645 describes gamma-radiation stable composite nonwoven fabrics which include spunbond layers wherein the spunbond fibers are multiconstituent fibers that include a lower melting polyethylene component and one or more higher melting components.

Multi-layer nonwoven laminates comprising spunbond and meltblown layers, such as spunbond-meltblown-spunbond (SMS) nonwoven fabrics are also known in the art. In SMS nonwoven laminates, the exterior layers are spunbond nonwoven webs that contribute strength to the overall composite, while the middle layer comprises a meltblown web which provides barrier properties. Similarly, composite nonwoven materials comprising additional layers of spunbond or meltblown webs can be prepared, such as spunbond-meltblown-meltblown-spunbond (SMMS) nonwoven laminates, and the like.

For certain nonwoven end uses, such as medical garments, it is desirable that the nonwoven fabrics have good strength, abrasion resistance, and barrier properties while also being as soft and drapeable as possible. For medical end uses, it is also desirable that the nonwoven fabrics be made of fibers of polymers which can be sterilized with gamma radiation. SMS fabrics have traditionally been polypropylene-based and have the limitation that they cannot be sterilized with gamma radiation because the fabrics are discolored and weakened as a result of the sterilization process. In addition, gamma-irradiation of polypropylene based fabrics results in the generation of unpleasant odors. This presents a significant problem for polypropylene-based SMS fabrics because radiation sterilization is commonly used throughout the medical industry.

There remains a need for low-cost nonwoven fabrics which have an improved combination of strength, abrasion resistance, barrier properties, drapeability, and softness and which can be sterilized by gamma radiation without significantly degrading the properties of the fabric and/or generating unpleasant odors.

**BRIEF SUMMARY OF THE INVENTION**

One embodiment of the present invention is a multiple component spunbond web comprising continuous multiple component spunbond fibers, said fibers having a peripheral surface comprising a linear low density polyethylene composition having a density between about 0.93 g/cm$^3$ to 0.95 g/cm$^3$, a melt index in the range of about 18 g/10 min to 22 g/10 min, and a polydispersity between about 3.6 to 6, and a second polymeric component.

Another embodiment of the present invention is a composite sheet comprising a first layer having a first side and an opposite second side; and a second layer attached to the first side of the first layer comprising a spunbond web of multiple component spunbond fibers, said fibers having a peripheral surface comprising a linear low density polyethylene composition having a density between about 0.93 g/cm$^3$ to 0.95 g/cm$^3$, a melt index in the range of about 18 g/10 min to 22 g/10 min, and a polydispersity between about 3.6 to 6, and a second polymeric component.

Another embodiment of the present invention is a method for forming a multiple component spunbond web comprising the steps of melt spinning continuous multiple component polymeric fibers comprising first and second polymeric components, the first polymeric component comprising a linear low density polyethylene composition having a density between about 0.93 g/cm$^3$ to 0.95 g/cm$^3$, a melt index in the range of about 18 g/10 min to 22 g/10 min, and a polydispersity between about 3.6 to 6, the multiple component fibers having a peripheral surface comprising the linear low density polyethylene composition on at least a portion thereof; drawing the multiple component filaments; quenching the multiple component filaments; and collecting the multiple component fibers on a collector surface to form a spunbond nonwoven web.

**DETAILED DESCRIPTION OF THE INVENTION**

It has been found that linear low density polyethylene compositions having a combination of density, melt index, and polydispersity falling within specified ranges provide improved spinnability in multiple component spunbond processes, especially when one or more of the other polymeric components in the multiple component fibers are substantially higher melting than the linear low density polyethylene component. The present invention also provides an improved balance of spinnability and spunbond fabric properties.

The term "linear low density polyethylene" (LLDPE) as used herein refers to linear ethylene/$\alpha$-olefin co-polymers having a density of less than about 0.955 g/cm$^3$, preferably in the range of 0.91 g/cm$^3$ to 0.95 g/cm$^3$, and more preferably in the range of 0.92 g/cm$^3$ to 0.95 g/cm$^3$. The linear low density polyethylenes used in the present invention are prepared by co-polymerizing ethylene with minor amounts of an alpha,beta-ethylenically unsaturated alkene co-monomer ($\alpha$-olefin), the $\alpha$-olefin co-monomer having from 3 to 12 carbons per $\alpha$-olefin molecule, and preferably from 4 to 8 carbons per $\alpha$-olefin molecule. Alpha-olefins which can be co-polymerized with ethylene to produce LLDPE's useful in the present invention include propylene, 1-butene, 1-pentene, 1-hexene, 1-octene, 1-decene, or a mixture thereof. Preferably, the $\alpha$-olefin is 1-hexene or 1-octene. Such polymers are termed "linear" because of the substantial absence of branched chains of polymerized monomer units pendant from the main polymer "backbone".

The term "high density polyethylene" (HDPE) as used herein refers to polyethylene homopolymer having a density of at least about 0.94 g/cm$^3$, and preferably in the range of about 0.94 g/cm$^3$ to about 0.965 g/cm$^3$.

The term "linear low density polyethylene composition" is used herein to refer to polymeric compositions which comprise at least about 90 percent, preferably at least about 95 percent by weight of one or more linear low density polyethylenes based on the total polymer weight. The linear low density polyethylene composition can comprise small amounts, for example 5%-10% by weight, preferably no greater than 5% by weight of other polymers, for example high density polyethylene or low density polyethylene (LDPE). When the LLDPE composition comprises a blend of polyethylenes, the density, melt index, and polydispersity are measured on the polyethylene blend to determine whether the linear low density polyethylene composition is suitable for preparing the spunbond materials of the present invention.

The term "polyester" as used herein is intended to embrace polymers wherein at least 85% of the recurring units are condensation products of dicarboxylic acids and dihydroxy alcohols with linkages created by formation of ester units. This includes aromatic, aliphatic, saturated, and unsaturated di-acids and di-alcohols. The term "polyester" as used herein also includes copolymers (such as block, graft, random and alternating copolymers), blends, and modifications thereof. A common example of a polyester is poly(ethylene terephthalate) (PET) which is a condensation product of ethylene glycol and terephthalic acid.

The term "fiber" is used herein to refer to both continuous and discontinuous fibers. The term "multiple component fiber" as used herein refers to any fiber that is composed of at least two distinct polymeric components which have been spun together to form a single fiber. The at least two distinct polymers can be spun from the same capillary (the pre-coalescent method) or the polymers can be spun from separate capillaries and joined to form a single fiber after extrusion from the spinneret (the post-coalescent method). Each of the at least two distinct polymeric components are arranged in distinct substantially constantly positioned zones across the cross-section of the multiple component fibers, with the zones of distinct polymers extending substantially continuously along the length of the fibers. The multiple component fibers are preferably bicomponent fibers formed from two distinct polymeric components. For example, the two distinct polymers can be arranged in a sheath-core or a side-by-side configuration. Multiple component fibers are distinguished from fibers formed from polymers that are blended together prior to extrusion, however one or more of the polymeric components in a multiple component fiber can comprise a polymer blend.

The terms "nonwoven fabric, sheet, layer or web" as used herein mean a structure of individual fibers that are positioned in a random manner to form a planar material without an identifiable pattern, as opposed to a knitted or woven fabric.

The term "machine direction" (MD) is used herein to refer to the direction in which a nonwoven web is produced. The term "cross direction" (XD) refers to the direction generally perpendicular to the machine direction.

The term "spunbond" fibers as used herein means fibers which are formed by extruding molten thermoplastic polymer material as fibers from a plurality of fine capillaries of a spinneret with the diameter of the extruded fibers then being rapidly reduced by drawing. Spunbond fibers are generally continuous and usually have an average diameter of greater than about 5 microns. The spunbond fibers of the present invention preferably have an average diameter between about 7 and 15 microns, more preferably between about 10 and 15 microns. Spunbond nonwoven webs are formed by laying spunbond fibers randomly onto a collecting surface such as a foraminous screen or belt. Spunbond fibers are quenched and are generally not tacky when they are deposited onto the collecting surface. Spunbond webs can be bonded by methods known in the art such as hot-roll calendering, through-air bonding, passing the web through a saturated-steam chamber at an elevated pressure, etc. For example, the web can be thermally point bonded at a plurality of thermal bond points located across the surface of the spunbond fabric.

The term "meltblown fibers" as used herein, means fibers which are formed by extruding a melt-processable polymer through a plurality of capillaries as molten threads or fibers into a high velocity heated gas (e.g. air) stream. The high velocity gas stream attenuates the fibers of molten thermoplastic polymer material to reduce their diameter. Meltblown fibers generally have a diameter of between about 0.5 and 10 microns and are generally discontinuous fibers, although they can also be continuous. Meltblown fibers carried by the high velocity gas stream are generally deposited onto a collecting surface to form a meltblown web of randomly dispersed fibers. Meltblown fibers are usually tacky when deposited onto the collecting surface.

The term "multiple component web" as used herein refers to a nonwoven web comprising multiple component fibers. The term "bicomponent web" as used herein refers to a nonwoven web comprising bicomponent fibers. Multiple component webs can comprise blends of multiple component fibers with single component fibers. The term "single component meltblown web" is used herein to refer to meltblown webs which are formed from single component meltblown fibers made of a single polymer or polymer blend.

The present invention is directed to a multiple component spunbond web and composites thereof. The multiple component spunbond webs of the present invention are comprised of multiple component spunbond fibers which include a polyethylene component, wherein the polyethylene component is a linear low density polyethylene composition having a density ($\rho$) between about 0.93 g/cm$^3$ to 0.95 g/cm$^3$, a melt index in the range of 18 g/10 min to 22 g/10 min, and a polydispersity (also referred to in the art as the molecular weight distribution), defined as the weight average molecular weight ($M_w$) divided by the number average molecular weight ($M_n$), of between about 3.6 to 6. The linear low density polyethylene composition preferably has a weight average molecular weight between about 50,000 to 60,000 and a number average molecular weight between about 10,000 to 14,000, more preferably the LLDPE composition has a $M_w$ between about 52,500 to about 57,500 and a $M_n$ between about 12,000 to about 14,000, and most preferably the $M_w$ of the LLDPE composition is between about 53,000 to about 55,000 and the $M_n$ is between about 12,500 to about 13,500. In one embodiment, the linear low density polyethylene composition is a blend comprising a high melt index linear low density polyethylene and a low melt index linear low density polyethylene.

The multiple component spunbond fibers further include a second polymeric component. The second polymeric component is preferably selected such that the multiple component spunbond fabric is radiation sterilizable. A fabric is considered to be "radiation sterilizable" when sterilization of the fabric with gamma radiation does not cause a reduction in the strength of the fabric, noticeably change the appearance of the fabric, or cause the generation an objectionable odor. The second polymeric component preferably has a higher melting point than the linear low density polyethylene component, such as a polyamide or a polyester. Polyamides suitable for use as the second polymeric component in the multiple component spunbond nonwoven fabrics of the present invention include poly(hexamethylene adipamide) (nylon 66), poly(caproamide) (nylon 6), and copolymers thereof. Polyesters suitable for use in the multiple component spunbond nonwoven webs of the present invention include poly(ethylene terephthalate), poly(1,3-propylene terephthalate), and copolymers thereof with 5-sulfoisophthalic acid.

In a preferred embodiment of the present invention, the multiple component spunbond nonwoven web is a bicomponent nonwoven web in which the second polymeric component is poly(ethylene terephthalate). In one embodiment, the poly(ethylene terephthalate) has a starting intrinsic viscosity in the range of 0.4 dl/g to 0.7 dl/g (measured according to ASTM D 2857, using 25 volume percent trifluoroacetic acid and 75 volume percent methylene chloride at 30°C in a capillary viscometer), more preferably 0.5 dl/g to 0.6 dl/g. The polyester component imparts strength to the bicomponent fibers while the linear low density polyethylene component imparts a soft hand and lowers the overall bending modulus of the fibers.

It has been found that formation of a multiple component spunbond web wherein the multiple component spunbond fibers comprise a polyester component and a polyethylene component consisting essentially of a linear low density polyethylene having a melt index greater than 22 g/10 min can be complicated by the generation of high levels of volatile materials during extrusion of the polymers from the spinneret, causing deposits to build up on the spinneret face, quench duct face, and inside the draw jet. High levels of deposit formation reduce productivity by requiring frequent shut-down of the spunbond process to permit removal of the deposits from the equipment. It has also been found that thermally bonded spunbond webs wherein the spunbond fibers comprise a polyester component and a polyethylene component consisting essentially of a linear low density polyethylene having a melt index less than 18 g/10 min generally have reduced grab tensile strength and a high rate of surface fuzzing compared to similar spunbond materials prepared using a higher melt index linear low density polyethylene.

The present invention unexpectedly provides an improved balance of spinning performance and spunbond nonwoven properties including grab tensile strength and abrasion resistance. The number of fiber breaks, polymer drips, and deposits on the pack face and jet surfaces are significantly reduced or substantially eliminated during a multiple component spunbonding process wherein at least one component is a linear low density polyethylene composition having a density between about 0.93 g/cm$^3$ to 0.95 g/cm$^3$, a melt index in the range of 18 g/10 min to 22 g/10 min, and a polydispersity between about 3.6 and 6 compared to multiple component spunbond nonwoven processes in which the linear low density polyethylene component consists essentially of a linear low density polyethylene having a melt index greater than 22 g/10 min. This is unexpected in view of the teaching of Davey (U.S. Patent no. 5,322,728), since good spinning performance is achieved during preparation of the spunbond fabrics of the present invention, even at relatively high spinning temperatures, despite the presence of low molecular weight species in LLDPE materials useful in the present invention. The abrasion resistance and grab tensile strength of the multiple component spunbond nonwoven fabrics of the present invention are also significantly improved compared to similar multiple component spunbond nonwoven fabrics in which the linear low density polyethylene component consists essentially of a linear low density polyethylene having a melt index less than 18.

Linear low density polyethylene compositions suitable as the LLDPE component of the multiple component spunbond materials of the present Invention have a density in the range of about 0.93 g/cm$^3$ to 0.95 g/cm$^3$, preferably between about 0.94 g/cm$^3$ to 0.95 g/cm$^3$, and most preferably between about 0.945 g/cm$^3$ and 0.947 g/cm$^3$. The melt index of the linear low density polyethylene composition is in the range of about 18 g/10 min to about 22 g/10 min, preferably between about 19 g/10 min to about 21 g/10 min. The polydispersity of the linear low density polyethylene composition is in the range of about 3.6 to about 6, more preferably between about 3.7 to about 4.8, and most preferably in the range of about 3.9 to about 4.4. It has been found that multiple component spunbond fabrics in which one or more of the polymeric components is a linear low density polyethylene composition having properties within these ranges provide improved spinnability and fabric properties compared to linear low density polyethylene compositions which have one or more of the density, melt index, and polydispersity falling outside these ranges. For example, if the melt index of a linear low density polyethylene composition is less than 18, the spunbond fabric will not have satisfactory abrasion resistance for some applications. Similarly, if the melt index is in the specified range but the polydispersity is too low, a reduction in abrasion resistance occurs. For melt indexes greater than 22 g/10 min, spinning problems generally occur (e.g. drips, broken filaments, etc.). If the melt index is in the specified range but the polydispersity is too high, spinning problems similarly occur.

In one embodiment of the present invention, the linear low density polyethylene composition comprises a blend containing at least 60 weight percent, more preferably between about 60 to about 90 weight percent, and most preferably between about 60 to about 80 weight percent, based on the total weight of linear low density polyethylene in the composition, of a low melt index linear low density polyethylene having a melt index (MI) in the range of about 10 g/10 min to 20 g/10 min, preferably between about 16 g/10 min to 18 g/10 min and no greater than 40 weight percent, more preferably between about 10 to 40 weight percent, and most preferably between about 20 to 40 weight percent, based on the total weight of linear low density polyethylene in the composition, of a high melt index linear low density polyethylene having a melt index in the range of greater than 20 g/10 min to about 40 g/10 min, preferably between about 26 g/10 min to 28 g/10 min. The high melt index LLDPE is blended with the low melt index LLDPE in an amount sufficient to provide a linear low density polyethylene blend composition having density in the range of about 0.93 g/cm$^3$ to 0.95 g/cm$^3$, preferably between about 0.94 g/cm$^3$ to 0.95 g/cm$^3$, and most preferably 0.945 g/cm$^3$ to 0.947 g/cm$^3$; a melt index in the range of about 18 g/10 min to about 22 g/10 min, preferably between about 19 g/10 min to about 21 g/10 min; and a polydispersity in the range of about 3.6 to about 6, more preferably between about 3.7 to about 4.8, and most preferably in the range of about 3.9 to about 4.4. The linear low density polyethylenes can be blended prior to extrusion in a spunbonding process, either by melt blending or dry blending. More than two LLDPE components can be included in the blend so long as the LLDPE blend has a density, melt index, and polydispersity in the ranges specified above.

Melt blending can be accomplished with conventional blending equipment such as mixing extruders, Brabender mixers, Banbury mixers, roll mills, etc. The melt blend can be extruded and the extrudate cut to form pellets which are fed to the spunbonding process. Alternately, pellets of the individual linear low density polyethylene blend components can be dry blended and fed as a blend of pellets to the spunbonding process, with the pellets of each LLDPE being metered at a rate to produce the desired ratio of high melt index linear low density polyethylene to low melt index linear low density polyethylene.

The melt index of a blend of high melt index and low melt index linear low density polyethylenes can be calculated using the logarithmic addition formula given below, wherein x is the weight fraction of Component 1:

$$\ln(MI_{blend}) = \times \cdot \ln(MI_{Component\ 1}) + (1 - x) \cdot \ln(MI_{Component2})$$

For blends comprising more than two polyethylene components, the corresponding equation is used with ln(MI) for each component being multiplied by the weight fraction of that component.

The linear low density polyethylene blend preferably has a $M_w$ between about 50,000 to about 60,000 and a $M_n$ between about 10,000 to about 14,000, more preferably the LLDPE composition has a $M_w$ between about 52,500 to about 57,500 and a $M_n$ between about 12,000 to about 14,000, and most preferably the $M_w$ of the LLDPE composition is between about 53,000 to about 55,000 and the $M_n$ is between about 12,500 to about 13,500.

The outer peripheral surface of the multiple component fibers of the nonwoven webs of the present invention preferably comprises the linear low density polyethylene composition on at least a portion thereof to enhance thermal bonding of the spunbond web. For example, the fibers can have a side-by-side configuration or a sheath/core configuration wherein the sheath comprises the LLDPE composition. The polyethylene component preferably has a melting point that is at least 10°C, preferably at least 30°C lower than the melting point of the second polymer component. Linear low density polyethylene compositions having a density, melt index, and polydispersity in the range of the present invention have been found to be particularly beneficial when co-spun with polyesters such as poly(ethylene terephthalate) to form multiple component spunbond webs. Due to the higher melting point of poly(ethylene terephthalate), the spinning temperature of the multiple component spunbond process is required to be substantially higher than the optimum spinning temperature for linear low density polyethylene alone. For example, the spinning temperature for preparing bicomponent poly(ethylene terephthalate)/linear low density polyethylene spunbond fibers of the present invention is preferably between about 285°C and 305°C, whereas the spinning temperature for preparing single component linear low density polyethylene fibers is generally between about 150°C and 200°C. It is believed that the use of higher than optimum spinning temperature for LLDPE in preparing PET/LLDPE multiple component spunbond fibers causes spinning problems (drips, broken filaments, etc.) to occur in multiple component spunbond processes which use linear low density polyethylene compositions having a melt index and/or polydispersity greater than the range of the present invention.

The multiple component spunbond webs of the present invention can be prepared using spunbond methods known in the art. For example, in preparing a bicomponent spunbond web, the two polymeric components can be melted in separate extruders and forced through filters and metering pumps, and then combined in a spin beam and extruded through extrusion orifices designed to produce the desired bicomponent fiber cross-section and denier-per-filament. The polymeric components can include small amounts of conventional additives such as dyes, pigments, antioxidants, UV stabilizers, spin finishes, and the like to the extent that they do not interfere with the spunbond process. Spinnerets for use in spunbond processes are well known in the art and generally have extrusion orifices arranged in one or more rows along the length of the spinneret face. The spin beam generally includes a spin pack which distributes and meters the polymers. Within the spin pack, the two polymeric components flow through a pattern of openings arranged to form the desired fiber cross-section. The extrusion orifice openings may be arranged on the spinneret face in a conventional pattern (rectangular, staggered, etc.) with the spacing of the openings set to optimize productivity and filament quenching. The density of the openings is typically in the range of 500 to 8000 holes/meter width of the pack. Typical polymer throughputs per opening are in the range of 0.3 to 5.0 g/min. Spunbond fibers are generally round but can be made in a variety of other shapes (e.g. oval, tri-lobal or multi-lobal, flat, hollow, etc.) and cross-sectional configurations (e.g. symmetrical sheath-core, eccentric sheath-core, side-by-side, and the like). In a preferred embodiment, the spunbond fibers are sheath-core fibers wherein the linear low density polyethylene component forms the sheath and a polyester component forms the core. The ratio of the two polymeric components in each spunbond fiber is generally between about 10:90 to 90:10 based on volume (for example measured as a ratio of metering pump speeds), preferably between about 30:70 to 70:30, and most preferably between about 40:60 to 60:40.

The spinneret used to form the multiple component spunbond fibers can be a pre-coalescent spinneret, or a post-coalescent spinneret. The polymers spun from the extrusion orifices form a plurality of vertically oriented fibers which creates a curtain of downwardly moving fibers. As the fibers are extruded from the spinneret they are drawn and cooled with quenching gas, such as air. Methods for drawing spunbond fibers are known in the art. For example the fibers can be passed through a pneumatic draw jet before being laid down to form a spunbond web. The jet provides the draw tension to draw the fibers near the surface of the spinneret face. Other methods for drawing the fibers such as one or more pair of draw rolls can be used. The fibers exiting the draw jet are generally travelling at fiber speeds in the range of from 2,000 to 12,000 m/min. The spunbond fibers are generally deposited on a collector surface such as a laydown belt or forming screen to form a web of substantially continuous filaments. Vacuum suction can applied from below the collector surface to help pin the continuous filament web to the belt. The spunbond web can be bonded in-line, such as by passing the web between thermal bonding rolls. Other bonding methods can also be used. For example, the spunbond web can be bonded using can be an in-line through-air bonder, ultrasonic bonder, or hydroentangling apparatus. Alternately, the web can be passed through a nip formed by an unheated compression roll, wound up on a collection roll, and bonded in later processing. When multi-layer nonwoven sheets are prepared in an in-line process, additional layers, such as one or more meltblown layers and/or one or more spunbond layers, may be deposited in the desired sequence and the combined layers bonded together instead of bonding the layers separately prior to forming the composite nonwoven sheet.

It may be desirable when spinning fibers having a side-by-side, or other cross-section in which the polymeric components may tend to separate, to include additives in the second polymeric component and/or the polyethylene component to improve adhesion between the components and prevent splitting during handling of the spunbond sheet. For example, Elvaloy® ethylene acrylate copolymers, available from DuPont (Wilmington, DE) can be added to the polyethylene component to promote adhesion to a polyester component.

Alternately, when splittable fibers are desired, a cross-sectional configuration is selected such that the polymeric segments in the multiple component fibers are not physically impeded from being separated. Suitable splittable configurations include side-by-side, wedge, hollow wedge, sectional configurations, and other splittable cross-sections known in the art. The fibers can be caused to split into finer fibers, each corresponding to one or more of the polymeric segments in the multiple component fibers. The fibers can be split during or after formation of the spunbond nonwoven web. For example, a spunbond web of splittable multiple component fibers can be treated to split the multiple component fibers by chemical treatment, mechanical working, needling (mechanical or hydraulic), etc.

For end uses in which the spunbond fabric is used without forming a composite sheet, such as industrial protective apparels, wipes, filters, packaging materials, upholstery, etc. the spunbond fabric preferably has a basis weight of between about 51 $g/cm^2$ to 238 $g/cm^2$, preferably between about 61 $g/cm^2$ to 170 $g/cm^2$, most preferably between about 61 $g/cm^2$ to 102 $g/cm^2$. When used in composite sheets, for example combined with one or more meltblown layers or with a film, the basis weight of an individual spunbond layer can be much lower, for example sDunbond sheets having basis weights in the range between about 10 $g/cm^2$ to 31 $g/cm^2$, preferably between about 17 $g/cm^2$ to 24 $g/cm^2$ are generally useful in composite sheets.

The multiple component spunbond fabrics of the present invention can be bonded with other layers, including films and other nonwoven layers, to form multi-layer composite sheets. For example the multiple component spunbond fabric can be bonded to a breathable microporous film. Microporous films are well known in the art, such as those formed from a polyolefin (e.g. polyethylene) and particulate fillers.

In one embodiment of the present invention, a spunbond layer of the present invention is bonded to a meltblown web to form a spunbond-meltblown (SM) composite nonwoven. Alternately, a composite spunbond-meltblown-spunbond nonwoven sheet can formed with a meltblown web sandwiched between and bonded to two spunbond layers, wherein at least one of the spunbond layers is a multiple component spunbond web of the present invention. The meltblown web can be a single component meltblown web or a multiple component meltblown web wherein the meltblown fibers preferably comprise polyethylene, for example high density polyethylene or linear low density polyethylene. Alternately, more than one meltblown web can be bonded to the spunbond web of the present invention, for example in a spunbond-meltblown-meltblown (SMM) composite, spunbond-meltblown-meltblown-spunbond (SMMS) composite nonwoven, and the like. When two or more meltblown layers are used in a composite nonwoven structure, the meltblown layers can be different or the same. For example, one or more meltblown layers can be single component meltblown webs and the remaining meltblown layers can be multiple component meltblown webs. In a preferred embodiment, the meltblown fibers comprise at least 60 weight percent linear low density polyethylene. For example, the meltblown fibers can be formed from 100% linear low density polyethylene or a blend of between about 60 and 100 weight percent linear low density polyethylene and between about 0 to 40 weight percent of another type of polyethylene, for example a high density polyethylene. The linear low density polyethylene used in the meltblown layer can be formed using the same or different $\alpha$-olefin co-monomer as that used to form the linear low density polyethylene component of the spunbond layer(s).

In a preferred embodiment of the present invention, a composite nonwoven sheet is formed by bonding a bicomponent meltblown web between two bicomponent spunbond webs of the present invention wherein the spunbond webs comprise continuous sheath-core fibers wherein a polyester component forms the core and the sheath comprises the LLDPE composition. The bicomponent meltblown web is preferably comprised of meltblown fibers comprising a polyethylene component and a polyester component, wherein the meltblown fibers are spun using a meltblowing die in which the two components are spun from melt-blowing orifices having a side-by-side configuration. The bicomponent meltblown fibers may also be spun in a sheath-core arrangement with the polyethylene component forming the sheath. The polyethylene component preferably comprises from about 7 volume percent to 99 volume percent, more preferably 7 volume percent to 50 volume percent of the bicomponent meltblown web. The polyethylene component most preferably comprises from 15 volume percent to 40 volume percent of the bicomponent meltblown web and the polyester component from 60 volume percent to 85 volume percent of the web. In an especially preferred embodiment, the polyethylene component comprises from 20 volume percent to 30 volume percent of the bicomponent meltblown web and the polyester component comprises from 70 volume percent to 80 volume percent of the web.

The SMS composite nonwoven sheets of the present invention preferably have a basis weight between about 44 to 119 $g/cm^2$, more preferably between about 51 to 85 $g/cm^2$, and most preferably between about 54 to 68 $g/cm^2$, with a Frazier air permeability preferably in the range of about 3 to 21 $cm^3/min/cm^2$, more preferably in the range of 4 to 12 $cm^3/min/cm^2$, and most preferably in the range of 5 to 11 $cm^3/min/cm^2$, and a hydrostatic head preferably in the range of about 35 to 150 cm $H_2O$, more preferably 45 to 120 cm $H_2O$, and most preferably in the range of 55 to 100 cm $H_2O$.

The meltblown webs used to form composite sheets of the present invention can be prepared using methods known in the art, such as the method described in U.S. Patent no. 6.057,256, or the new methods described in copending U.S. patent application serial nos. 09/681,682 and 09/681,683, all of which are incorporated by reference.

The spunbond and meltblown layers can be processed separately and subsequently bonded to each other in an off-line process to form a multi-layer composite nonwoven sheet. In a preferred embodiment, the meltblown fibers are deposited directly onto a multiple component spunbond layer of the present invention in an in-line process.

The spunbond and meltblown layers of the composite nonwoven fabric can be thermally bonded to one another, for example with a meltblown layer sandwiched between two spunbond layers of the present invention to form a SMS composite nonwoven sheet. Thermal bonding temperatures in the range of 110° C to 130° C and bonding pressures in the range of 350-700 N/cm have been found to be suitable for thermal bonding of the composite SMS sheets of the present invention. Bonding is preferably done in a manner which preserves both the breathability and barrier properties of the fabric. For example, the bonding temperature and pressure should be selected such that pinholes are not formed in the meltblown layer which would reduce the barrier properties of the composite sheet. Alternate methods for bonding the layers of the composite sheet include calender bonding, through-air bonding, steam bonding, and adhesive bonding. For example, an adhesive may be applied in a discrete pattern between adjacent layers or as a continuous layer if the adhesive is a breathable adhesive.

## TEST METHODS

In the description above and in the examples that follow, the following test methods were employed to determine various reported characteristics and properties. ASTM refers to the American Society for Testing and Materials, and AATCC refers to the American Association of Textile Chemists and Colorists.

Polymer density is determined according to ASTM D1505-98, which is hereby incorporated by reference.

Polymer melting point is determined using differential scanning calorimetry (DSC) according to ASTM D 3418-99.

Number average molecular weight and weight average molecular weight are determined according to ASTM D6474-99, which is hereby incorporated by reference.

Melt Index is measured according to ASTM D-1238 (2.16 kg @ 190° C), which is hereby incorporated by reference.

Fiber Diameter was measured via optical microscopy and is reported as an average value in microns. For each spunbond sample the diameters of about 100 fibers were measured and averaged. The spunbond denier per fiber was calculated using fiber size, ratios of PET and polyethylene in the bicomponent fiber, and the polymer densities of PET and polyethylene.

Basis Weight is a measure of the mass per unit area of a fabric or sheet and was determined by ASTM D-3776, which is hereby incorporated by reference, and is reported in units of $g/m^2$.

Grab Tensile Strength is a measure of the breaking strength of a sheet and was conducted according to ASTM D 5034, which is hereby incorporated by reference, and is reported in Newtons or pounds. Grab tensile strength is reported in the examples for the machine direction (MD) and for the cross-direction (XD).

Percent Elongation is measured at the point where the sample initially fails and is the elongation at which the load peaks during the grab tensile measurement. Percent elongation is reported in the examples for the machine direction (MD) and for the cross-direction (XD).

Frazier Air Permeability is a measure of air flow passing through a sheet under at a stated pressure differential between the surfaces of the sheet and was conducted according to ASTM D 737, which is hereby incorporated by reference, and is reported in $(m^3/min)/m^2$.

Hydrostatic Head is a measure of the resistance of the sheet to penetration by liquid water under a static pressure. The test was conducted according to AATCC-127, which is hereby incorporated by reference, and is reported in inches or centimeters of water.

Abrasion Resistance was evaluated qualitatively by visual inspection of the surface of the fabric after physically rubbing the fabric several times between the thumb and forefinger. Samples which formed "fuzz" (i.e. loose fibers projecting from the fabric surface) were given a rating of poor, whereas samples which exhibited no fuzzing were rated as excellent.

## EXAMPLES

### Comparative Example A

In this example, a bicomponent spunbond fabric was made from a high melt index linear low density polyethylene component and a poly(ethylene terephthalate) component. The LLDPE component had a melt index of 27 g/10 minutes and is available from Dow Chemical Company as Dow Aspun® 6811A polyethylene. The polyester component was poly(ethylene terephthalate) having a reported intrinsic viscosity of 0.53 dl/g available from DuPont as Crystar® polyester (Merge 4449). The polyester resin was dried in a through-air drier at a air temperature of 120°C, to a polymer moisture content of less than 50 parts per million. The polymers were heated in separate extruders with the polyethylene polymer heated to 250°C and the polyester polymer heated to 290°C. The two polymers were metered to a spin-pack assembly where the two melt streams were separately filtered and then combined through a stack of distribution plates to provide multiple rows of spunbond fibers having sheath-core cross-sections. The polyester component comprised the core and the LLDPE component comprised the sheath.

The spin-pack assembly consisted of a total of 2016 round capillary openings (28 rows of 72 capillaries in each row), each capillary having a diameter of 0.35 mm and a length of 1.40 mm. The width of the spin-pack in the machine direction was 11.3 cm, and in the cross-direction was 50.4 cm. The spin-pack assembly was heated to 295°C and the polymers were spun through each capillary at a polymer throughput rate of 1.0 g/hole/min. The polyester component consisted of 70% by weight of the spunbond fibers. The fibers were cooled in a cross-flow quench extending over a length of 48.3 cm. The attenuating force was provided to the bundle of fibers by a rectangular slot jet. The distance between the spin-pack to the entrance to the jet was 63.5 cm. The fibers exiting the jet were collected on a forming belt. A vacuum was applied underneath the belt to help pin the fibers to the belt. The spunbond layer was then thermally bonded between an embosser roll and an anvil roll. The bonding conditions were 110°C roll temperature and 350 N/cm nip pressure. After thermal bonding, the spunbond sheet was formed into a roll using a winder. Spinning performance and bonded sheet properties are summarized in Tables 1 and 2 below.

### Comparative Example B

In this example, a bicomponent spunbond sheet was made from a low melt index linear low density polyethylene component and a poly(ethylene terephthalate) component. A bonded spunbond sheet was prepared using the conditions described in Comparative Example A, except that the polyethylene component was a linear low density polyethylene having a melt index of 17 g/10 minutes and available from Dow as Dow XU61800-34 polyethylene, and the sheet was bonded using 128°C roll temperature. Spinning performance and bonded sheet properties are summarized in Tables 1 and 2 below.

### Examples 1-2

Examples 1 and 2 demonstrate preparation of bicomponent spunbond sheets according to the present invention. Spunbond sheet samples were prepared using the spunbond process conditions described in Comparative Example A, except that the polyethylene component was made from a blend of two different linear low density polyethylenes. The first LLDPE was the low melt index LLDPE used in Comparative Example B, having a melt index of 17 g/10 minutes, available from Dow Chemical Company as Dow XU61800-34. The second LLDPE was the high melt index LLDPE used in Comparative Example A, having a melt index of 27 g/10 minutes, available from Dow as Dow Aspun® 6811A. The blend was prepared by dry-blending the pellets and the blended pellets were fed to the extruder. In Example 1, the first (low MI) linear low density polyethylene constituted 90% by weight of the blend and in Example 2, the first (low MI) linear low density polyethylene constituted 80% by weight of the blend. The LLDPE blend of Example 1 had a measured density of 0.946 $g/cm^3$, a calculated melt index of 17.8, a $M_w$ of 59,799, and a $M_n$ of 14,541 (polydispersity = 4.11). The LLDPE blend of Example 2 had a measured density of 0.946 $g/cm^3$, a calculated melt index of 18.6, a $M_w$

of 56,918, and a $M_n$ of 13,195 (polydispersity = 4.31). The bonding conditions were 128°C roll temperature and 700 N/cm nip pressure. Spinning performance and bonded sheet properties are summarized in Tables 1 and 2 below.

The results of Examples 1-2 and Comparative Examples A and B demonstrate that when the LLDPE component was a high melt index polymer (Comparative Example A), the spinning performance was very poor, with a large number of broken fibers and a significant build up of deposits on the spinning equipment. On the other hand, when the LLDPE component was a low melt index polymer (Comparative Example B), the spinning performance was good but the abrasion resistance of the bonded sheet was poor and the grab tensile strength was reduced compared to the spunbond sheet made from the high melt index polymer. When a blend of two LLDPE's was used according to the present invention (Examples 1 and 2), both the spinning performance and abrasion resistance were excellent. The grab tensile strengths of the spunbond fabrics of the invention were comparable to or better than those achieved using a high melt index LLDPE alone.

**Table 1. Spinning Performance**

| | Comparative Example A | Comparative Example B | Example 1 | Example 2 |
|---|---|---|---|---|
| Build-up on Spin-pack face, Quench ducts, and Jet | Very Poor | Excellent | Excellent | Excellent |
| Broken Fibers | Very Poor | Excellent | Excellent | Excellent |

**Table 2. Bonded Sheet Properties**

| | Comparative Example A | Comparative Example B | Example 1 | Example 2 |
|---|---|---|---|---|
| Basis Weight (g/m$^2$) | 59.66 | 57.29 | 52.88 | 53.56 |
| XD Grab Tensile Strength (N) | 99.2 | 67.6 | 109.0 | 139.2 |
| Elongation, XD (%) | 90.6 | 16.9 | 11.0 | 9.6 |
| MD Grab Tensile Strength (N) | 163.7 | 96.1 | 159.7 | 242.0 |
| Elongation, MD (%) | 96.3 | 17.3 | 11.9 | 8.8 |
| Air Permeability (m$^3$/min)/m$^2$ | 66.4 | 60.7 | 65.8 | 61.0 |
| Hydrostatic head (cm H$_2$O) | 24.1 | 22.3 | 20.8 | 21.2 |
| Fiber diameter ($\mu$m) | 11.6 | 12.1 | 11.9 | 11.0 |
| Abrasion Resistance | Excellent | Poor | Excellent | Excellent |

**Example 3**

In this example, a laminated nonwoven sheet structure was prepared in which a bicomponent meltblown web was sandwiched between two outer bicomponent spunbond layers of the present invention. The two outer spunbond layers were prepared according to Example 2 except that each spunbond layer had a basis weight of 22.04 g/m$^2$. The basis weight was adjusted by increasing the beit speed compared to Example 2.

The meltblown bicomponent web was made with a polyethylene component and a poly(ethylene terephthalate) component. The polyethylene component was linear low density polyethylene with a melt index of 150 g/10 minutes available from Dow Chemical Company as Dow Aspun® 6831A. The polyester component was poly(ethylene terephthalate) with a reported intrinsic viscosity of 0.53 dl/g available from DuPont as Crystar® polyester (Merge 4449). The polymers were heated and extruded from separate extruders with the polyethylene polymer heated to 260°C and the polyester polymer heated to 305°C. The separate polymer streams were metered to a melt-blowing die assembly that was heated to 300°C. The die had 624 capillary openings arranged in a 52.4 cm line. The two polymer streams were independently filtered in this die assembly and then combined by a stack of polymer distribution plates arranged to provide a side-by-side fiber configuration. The polymers were spun through each capillary at a polymer throughput rate of 0.80 g/hole/min. Attenuating air was heated to a temperature of 315°C and supplied at a pressure of 62 kPa through two 1.5 mm wide air channels. The two air channels ran the length of the 52.4 cm line of capillary openings, with one channel on each side of the line of capillaries set back 1.5 mm from the capillary openings. The polyethylene was supplied to the spin pack at a rate of 6.0 kg/hr and the polyester was supplied to the spin pack at a rate of 24.0 kg/hr to provide a bicomponent meltblown web that was 20 weight percent polyethylene and 80 weight percent polyester. The fibers were collected at a die to collector distance of 13.7 cm on a moving forming screen to produce a meltblown web having a basis weight of 17 g/m$^2$ which was collected on a roll.

The meltblown web was sandwiched between the two spunbond layers and the laminate structure was bonded in a nip formed by an engraved oil-heated metal calender roll and a smooth oil-heated metal calender roll. Both rolls had a diameter of 466 mm. The engraved roll had a chrome coated non-hardened steel surface with a diamond pattern having a point size of 0.466 mm$^2$, a point depth of 0.86 mm, a point spacing of 1.2 mm, and a bond area of 14.6%. The smooth roll had a hardened steel surface. The composite web was bonded at a temperature of 110°C with a nip pressure of 350 N/cm, and a line speed of 50 m/min. Sheet properties are listed in Table 3 below.

Table 3.

| Composite Sheet Properties | |
|---|---|
| | Example 3 |
| Basis Weight (g/m$^2$) | 61.0 |
| XD Grab Tensile Strength (N) | 69.4 |
| Elongation, XD (%) | 4.9 |
| Grab Tensile Strength, MD (N) | 114.3 |
| Elongation, MD (%) | 9.6 |
| Air Permeability (m$^3$/min)/m$^2$ | 6.10 |
| Hydrostatic head (cm H$_2$O) | 87.8 |
| Abrasion Resistance | Excellent |

**Example 4**

In this example, a laminated nonwoven sheet structure was prepared in which a bicomponent meltblown web was sandwiched between two outer bicomponent spunbond layers of the present invention. The two outer spunbond layers were prepared according to Example 2 except that the LLDPE polymer used was a single component polyethylene resin obtained from Equistar Chemical Co, Cincinnati, OH. The LLDPE had a density of 0.946 g/cm$^3$, a melt index of 20, a $M_w$ of 54,800, and a $M_n$ of 12,900 (polydispersity = 4.25). Each spunbond layer had a basis weight of 22.04 g/m$^2$. The basis weight was adjusted by increasing the belt speed compared to Example 2. Spinning performance was excellent with no build-up of deposits on the spin pack face, quench ducts, or duct.

The meltblown bicomponent web was made with a polyethylene component and a poly(ethylene terephthalate) component. The polyethylene component was linear low density polyethylene with a melt index of 135 g/10 minutes available from Equistar Chemical Company as Equistar GA594-000. The polyester component was poly(ethylene terephthalate) with a reported intrinsic viscosity of 0.53 dl/g available from DuPont as Crystar® polyester (Merge 4449). The meltblown bicomponent web was made using the equipment and process conditions of Example 3.

The meltblown web was sandwiched between the two spunbond layers and the laminate structure was bonded in a nip formed by an engraved oil-heated metal calender roll and a smooth oil-heated metal calender roll. Both rolls had a diameter of 466 mm. The engraved roll had a chrome coated non-hardened steel surface with a diamond pattern having a point size of 0.466 mm$^2$, a point depth of 0.86 mm, a point spacing of 1.2 mm, and a bond area of 14.6%. The smooth roll had a hardened steel surface. The composite web was bonded at a temperature of 110°C with a nip pressure of 350 N/cm, and a line speed of 50 m/min. Sheet properties are listed in Table 4 below.

Table 4.

| Composite Sheet Properties | |
|---|---|
| | |
| Basis Weight (g/m$^2$) | 61.0 |
| XD Grab Tensile Strength (N) | 69.0 |
| Elongation, XD (%) | 5.0 |
| Grab Tensile Strength, MD (N) | 113.0 |
| Elongation, MD (%) | 11.0 |
| Air Permeability, (m$^3$/min)/m$^2$ | 6.10 |
| Hydrostatic head (cm H$_2$O) | 96.2 |
| Abrasion Resistance | Excellent |

**Claims**

1. A multiple component spunbond web comprising continuous multiple component spunbond fibers, said fibers having a peripheral surface comprising a linear low density polyethylene composition having a density between about 0.93 g/cm$^3$ to 0.95 g/cm$^3$, a melt index in the range of about 18 g/10 min to 22 g/10 min, and a polydispersity between about 3.6 to 6, and a second polymeric component.

2. The multiple component spunbond web according to claim 1 wherein the linear low density polyethylene composition comprises a blend of a low melt index linear low density polyethylene having a melt index in the range of about 10 g/10 min to 20 g/10 min and a high melt index linear low density polyethylene having a melt index in the range of greater than 20 g/10 min to about 40 g/10 min.

3. The multiple component spunbond web according to claim 1, wherein the linear low density polyethylene composition has a density between about 0.94 g/cm$^3$ to 0.95 g/cm$^3$, a melt index between about 19 g/10 min to 21 g/10 min, and a poiydispersity between about 3.7 to 4.8.

4. The multiple component spunbond web according to claim 3 wherein the linear low density polyethylene composition has a density between about 0.945 g/cm$^3$ and 9.947 g/cm$^3$, a melt index between about 19 g/10 min to 21 g/10 min, and a polydispersity between about 3.9 to 4.4.

5. The multiple component spunbond web according to claim 1, wherein the second polymeric component has a melting point that is at least about 30°C higher than the linear low density polyethylene composition.

6. The multiple component spunbond web according to claim 5 wherein the second polymeric component is selected from the group consisting of polyesters and polyamides.

7. The multiple component spunbond web according to claim 6 wherein the second polymeric component is a polyester.

8. The multiple component spunbond web according to claim 7 wherein the second polymeric component is poly (ethylene terephthalate).

9. The multiple component spunbond web according to claim 8 wherein the ratio of the polyethylene component to the poly(ethylene terephthalate) component is 30:70 to 70:30 by volume.

10. The multiple component spunbond web according to claim 1, wherein the multiple component spunbond fibers have a cross-section selected from the group consisting of side-by-side and sheath-core configurations.

11. The multiple component spunbond web according to claim 10 wherein the multiple component spunbond fibers have a sheath-core configuration with the polyethylene component forming the sheath and the second polymeric component forming the core.

12. The multiple component spunbond web according to claim 11 wherein the second polymeric component is poly (ethylene terephthalate).

13. The multiple component spunbond web according to claim 2 wherein the linear low density polyethylene composition comprises between about 60 to 90 percent by weight of the low melt index linear low density polyethylene and between about 10 to 40 percent by weight of the high melt index linear low density polyethylene.

14. The multiple component spunbond web according to claim 13 wherein the low melt index linear low density polyethylene has a melt index between about 16 g/10 min to 18 g/10 min and the high melt index linear low density polyethylene has a melt index between about 19 g/10 min to 21 g/10 min.

15. A composite sheet comprising

   a first layer having a first side and an opposite second side; and

   a second layer attached to the first side of the first layer comprising a spunbond web of multiple component spunbond fibers, said fibers having a peripheral surface comprising a linear low density polyethylene composition having a density between about 0.93 g/cm$^3$ to 0.95 g/cm$^3$, a melt index in the range of about 18 g/10 min to 22 g/10 min, and a polydispersity between about 3.6 to 6, and a second polymeric component.

16. The composite sheet according to claim 15 wherein the linear low density polyethylene composition comprises a blend of a low melt index linear low density polyethylene having a melt index in the range of about 10 g/10 min to 20 g/10 min and a high melt index linear low density polyethylene having a melt index in the range of greater than 20 g/10 min to about 40 g/10 min.

17. The composite sheet according to claim 15, wherein the first layer comprises a web of meltblown fibers.

18. The composite sheet according to claim 17, wherein the meltblown fibers are multiple component fibers having a peripheral surface comprising a polyethylene component on at least a portion thereof.

19. The composite sheet according to claim 23, wherein the multiple component meltblown fibers further comprise a polyester component.

20. The composite sheet according to claim 19, wherein the polyester components comprise poly(ethylene terephthalate).

21. The composite sheet according to claim 15, further comprising:

   a third layer attached to the opposite second side of the first layer comprising a second spunbond web of continuous multiple component fibers, said fibers having a peripheral surface comprising a linear low density polyethylene composition having a density between about 0.93 g/cm$^3$ to 0.95 g/cm$^3$, a melt index in the range of about 18 g/10 min to 22 g/10 min, a polydispersity between about 3.6 to 6, and a second polymeric component.

22. The composite sheet according to claim 21, wherein the linear low density polyethylene composition of the second spunbond web comprises a blend of a low melt index linear low density polyethylene having a melt index in the range of about 10 g/10 min to 20 g/10 min and a high melt index linear low density polyethylene having a melt index in the range of greater than 20 g/10 min to about 40 g/10 min.

23. The composite sheet according to claim 21, wherein the spunbond fibers of the second and third nonwoven layers have substantially the same cross-section and polymeric composition.

24. The composite sheet according to claim 21, wherein the spunbond multiple component continuous fibers of the second and third nonwoven layers comprise bicomponent sheath-core fibers, wherein the cores of said fibers are polyester.

25. A gamma radiation sterilizable medical garment comprised of the composite sheet of claim 21.

26. The composite sheet according to claim 15, wherein the first layer comprises a microporous film.

27. A method for forming a multiple component spunbond web comprising the steps of:

a) melt spinning continuous multiple component polymeric fibers comprising first and second polymeric components, the first polymeric component comprising a linear low density polyethylene composition having a density between about 0.93 $g/cm^3$ to 0.95 $g/cm^3$, a melt index in the range of about 18 g/10 min to 22 g/10 min, and a polydispersity between about 3.6 to 6, the multiple component fibers having a peripheral surface comprising the linear low density polyethylene composition on at least a portion thereof;
b) drawing the multiple component filaments;
c) quenching the multiple component filaments; and
d) collecting the multiple component fibers on a collector surface to form a spunbond nonwoven web.

28. The method according to claim 27, wherein said second polymeric component is poly(ethylene terephthalate) and said components are spun through a spin pack assembly heated to a temperature between about 285°C and 305°C.

EP 1 344 857 A1

**European Patent Office**

## EUROPEAN SEARCH REPORT

Application Number

EP 03 25 1344

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 95 15848 A (FIBERWEB NORTH AMERICA INC ;LICKFIELD DEBORAH K (US); BERMAN MARK) 15 June 1995 (1995-06-15) * column 4, line 14 - column 5, line 35 * --- | 1,15 | D04H3/00 D04H13/00 C08L23/04 B32B27/14 |
| Y | EP 0 314 151 A (DOW CHEMICAL CO) 3 May 1989 (1989-05-03) * example 11 * --- | 1,15,21, 27 | |
| Y | US 5 484 645 A (LICKFIELD DEBORAH K ET AL) 16 January 1996 (1996-01-16) * claim 1 * --- | 21 | |
| Y | US 4 990 204 A (BIESER JOHN O ET AL) 5 February 1991 (1991-02-05) * the whole document * ----- | 27 | |

| | TECHNICAL FIELDS SEARCHED (Int.Cl.7) |
|---|---|
| | D04H C08L B32B |

The present search report has been drawn up for all claims

| Place of search | Date of completion of the search | Examiner |
|---|---|---|
| MUNICH | 23 July 2003 | Lanniel, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 03 25 1344

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2003

| Patent document cited in search report | | Publication date | Patent family member(s) | | Publication date |
|---|---|---|---|---|---|
| WO 9515848 | A | 15-06-1995 | US | 5484645 A | 16-01-1996 |
| | | | AT | 164548 T | 15-04-1998 |
| | | | AU | 1265595 A | 27-06-1995 |
| | | | DE | 69409400 D1 | 07-05-1998 |
| | | | DE | 69409400 T2 | 29-10-1998 |
| | | | DK | 732992 T3 | 01-02-1999 |
| | | | EP | 0732992 A1 | 25-09-1996 |
| | | | IL | 111910 A | 16-08-1998 |
| | | | JP | 9506305 T | 24-06-1997 |
| | | | WO | 9515848 A1 | 15-06-1995 |
| EP 0314151 | A | 03-05-1989 | US | 4842922 A | 27-06-1989 |
| | | | AT | 101209 T | 15-02-1994 |
| | | | AU | 2717688 A | 23-05-1989 |
| | | | AU | 619785 B2 | 06-02-1992 |
| | | | CA | 1328519 C | 12-04-1994 |
| | | | DE | 3887630 D1 | 17-03-1994 |
| | | | DE | 3887630 T2 | 19-05-1994 |
| | | | EP | 0314151 A2 | 03-05-1989 |
| | | | ES | 2050137 T3 | 16-05-1994 |
| | | | FI | 893134 A ,B, | 27-06-1989 |
| | | | KR | 138657 B1 | 01-05-1998 |
| | | | NO | 901855 A | 26-04-1990 |
| | | | WO | 8903856 A1 | 05-05-1989 |
| | | | US | 4990204 A | 05-02-1991 |
| | | | US | 5112686 A | 12-05-1992 |
| | | | US | 5254299 A | 19-10-1993 |
| US 5484645 | A | 16-01-1996 | US | 5503907 A | 02-04-1996 |
| | | | US | 5415925 A | 16-05-1995 |
| | | | AT | 164548 T | 15-04-1998 |
| | | | AU | 1265595 A | 27-06-1995 |
| | | | DE | 69409400 D1 | 07-05-1998 |
| | | | DE | 69409400 T2 | 29-10-1998 |
| | | | DK | 732992 T3 | 01-02-1999 |
| | | | EP | 0732992 A1 | 25-09-1996 |
| | | | IL | 111910 A | 16-08-1998 |
| | | | JP | 9506305 T | 24-06-1997 |
| | | | WO | 9515848 A1 | 15-06-1995 |
| | | | AU | 7327194 A | 20-02-1995 |
| | | | NO | 960218 A | 19-03-1996 |
| | | | NZ | 269402 A | 26-11-1996 |
| | | | PL | 312388 A1 | 15-04-1996 |
| | | | WO | 9503172 A1 | 02-02-1995 |
| | | | AT | 145681 T | 15-12-1996 |
| | | | AU | 669197 B2 | 30-05-1996 |

**ANNEX TO THE EUROPEAN SEARCH REPORT
ON EUROPEAN PATENT APPLICATION NO.** EP 03 25 1344

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2003

| Patent document cited in search report | | Publication date | Patent family member(s) | | Publication date |
|---|---|---|---|---|---|
| US 5484645 | A | | AU | 4598793 A | 04-01-1994 |
| | | | BR | 9306527 A | 15-09-1998 |
| | | | CA | 2137132 A1 | 23-12-1993 |
| | | | CN | 1086276 A | 04-05-1994 |
| | | | DE | 69306254 D1 | 09-01-1997 |
| | | | DE | 69306254 T2 | 12-06-1997 |
| | | | EP | 0644962 A1 | 29-03-1995 |
| | | | FI | 945804 A | 09-12-1994 |
| | | | JP | 7507847 T | 31-08-1995 |
| | | | MX | 9303479 A1 | 31-05-1994 |
| | | | NO | 944774 A | 09-12-1994 |
| | | | NZ | 254329 A | 21-12-1995 |
| | | | WO | 9325746 A1 | 23-12-1993 |
| | | | US | 5593768 A | 14-01-1997 |
| US 4990204 | A | 05-02-1991 | US | 4842922 A | 27-06-1989 |
| | | | US | 5254299 A | 19-10-1993 |
| | | | AT | 101209 T | 15-02-1994 |
| | | | AU | 2717688 A | 23-05-1989 |
| | | | AU | 619785 B2 | 06-02-1992 |
| | | | CA | 1328519 C | 12-04-1994 |
| | | | DE | 3887630 D1 | 17-03-1994 |
| | | | DE | 3887630 T2 | 19-05-1994 |
| | | | EP | 0314151 A2 | 03-05-1989 |
| | | | ES | 2050137 T3 | 16-05-1994 |
| | | | FI | 893134 A ,B, | 27-06-1989 |
| | | | KR | 138657 B1 | 01-05-1998 |
| | | | NO | 901855 A | 26-04-1990 |
| | | | WO | 8903856 A1 | 05-05-1989 |
| | | | US | 5112686 A | 12-05-1992 |

EPO FORM P0459

For more details about this annex : see Official Journal of the European Patent Office, No. 12/82